# EUROPEAN PATENT APPLICATION

(11) **EP 4 654 329 A1**
(43) Date of publication of application: **26.11.2025**
(21) Application number: 24845900.0
(22) Date of filing: 16.07.2024
(51) Int. Cl.: H01M 10/48, H01M 10/42, G01H 17/00

(54) **APPARATUS AND METHOD FOR DIAGNOSING BATTERY**

(30) Priority: 24.07.2023 KR 20230096083
(71) Applicant: LG Energy Solution, Ltd., Seoul 07335 (KR)
(72) Inventor: SONG, Chang-Yong, Daejeon 34122 (KR)
(74) Representative: Goddar, Heinz J.
(86) International application number: PCT/KR2024/010199
(87) International publication number: WO 2025/023597

(57) **Abstract**

An apparatus for diagnosing a battery according to an embodiment of the present disclosure includes a measuring unit configured to measure a vibration value generated in a preset axial direction for each of a plurality of batteries; and a control unit configured to diagnose a state of the plurality of batteries from the vibration value of each of the plurality of batteries based on at least one of a reference deviation value preset for the plurality of batteries and a reference vibration value preset to correspond to the axial direction.

## Description

### TECHNICAL FIELD

The present application claims priority to Korean Patent Application No. 10-2023-0096083 filed on July 24, 2023, in the Republic of Korea, the disclosures of which are incorporated herein by reference.

The present disclosure relates to an apparatus and method for diagnosing a battery, and more particularly, to an apparatus and method for diagnosing a battery, which diagnoses a state of a battery based on a vibration value generated in the battery.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

As electric vehicles, electric motorcycles, electric bicycles, and other powerdriven devices become commercialized, the demand for high-capacity and high-performance batteries is increasing. To meet these demands, an electric vehicle, etc. includes a plurality of battery packs. For example, a plurality of battery packs are connected to each other using connectors to satisfy the output required by electric vehicles.

However, if vibration or external impact is applied to a plurality of connected battery packs, a connection failure may occur between the plurality of battery packs. Such a connection failure may weaken the connector connection and cause a micro-short circuit.

### DISCLOSURE

### Technical Problem

The present disclosure is designed to solve the problems of the related art, and therefore the present disclosure is directed to providing an apparatus and method for diagnosing a battery, which diagnoses a state of a battery based on a vibration value generated in the battery.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

An apparatus for diagnosing a battery according to one aspect of the present disclosure may comprise a measuring unit configured to measure a vibration value generated in a preset axial direction for each of a plurality of batteries; and a control unit configured to diagnose a state of the plurality of batteries from the vibration value of each of the plurality of batteries based on at least one of a reference deviation value preset for the plurality of batteries and a reference vibration value preset to correspond to the axial direction.

The preset axial direction may be configured to include at least one of an X-axis direction set as a moving direction of the plurality of batteries; a Y-axis direction set as a left and right direction perpendicular to the moving direction of the plurality of batteries; and a Z-axis direction set as an upper and lower direction perpendicular to the moving direction of the plurality of batteries.

The control unit may be configured to calculate a vibration value deviation of a plurality of vibration values measured by the measuring unit for each axial direction, compare each calculated vibration value deviation with the reference deviation value, and diagnose the state of each of the plurality of batteries based on the comparison result.

The control unit may be configured to diagnose a state of a battery whose vibration value deviation is less than or equal to the reference deviation value as a normal state, and diagnose a state of a battery whose vibration value deviation exceeds the reference deviation value as a defective state.

The measuring unit may be configured to measure a first vibration value of each of the plurality of batteries generated in the X-axis direction for each preset measurement cycle.

The control unit may be configured to calculate the number of times that a maximum value of the first vibration value measured for each measurement cycle during a preset threshold time is equal to or greater than a first reference vibration value preset to correspond to the X-axis direction, and to calculate a vibration value deviation with respect to the first vibration value when the calculated number reaches a reference number.

The measuring unit may be configured to measure a second vibration value of each of the plurality of batteries generated in the Y-axis direction.

The control unit may be configured to diagnose a state of a battery whose second vibration value is less than or equal to a second reference vibration value preset to correspond to the Y-axis direction as a normal state, and diagnose a state of a battery whose second vibration value exceeds the second reference vibration value as a defective state.

The measuring unit may be configured to measure a third vibration value of each of the plurality of batteries generated in the Z-axis direction.

The control unit may be configured to diagnose a state of a battery whose third vibration value is less than or equal to a third reference vibration value preset to correspond to the Z-axis direction as a normal state, and diagnose a state of a battery whose third vibration value exceeds the third reference vibration value as a defective state.

The control unit may be configured to diagnose the state of each of the plurality of batteries as a normal state or a defective state, and electrically isolate a battery diagnosed as the defective state from a battery diagnosed as the normal state.

A battery pack according to another aspect of the present disclosure may comprise the apparatus for diagnosing a battery according to one aspect of the present disclosure.

A vehicle according to still another aspect of the present disclosure may comprise the apparatus for diagnosing a battery according to one aspect of the present disclosure.

A method for diagnosing a battery according to still another aspect of the present disclosure may comprise: a vibration value measuring step of measuring a vibration value generated in a preset axial direction for each of a plurality of batteries; and a battery state diagnosing step of diagnosing a state of the plurality of batteries from the vibration value of each of the plurality of batteries based on at least one of a reference deviation value preset for the plurality of batteries and a reference vibration value preset to correspond to the axial direction.

### Advantageous Effects

According to one aspect of the present disclosure, the apparatus for diagnosing a battery has an advantage in that it may diagnose the state of the battery based on the amount of vibration in the axial direction set based on the moving direction of a plurality of batteries. That is, since the apparatus for diagnosing a battery may quickly diagnose the state of a plurality of batteries based on the amount of vibration of the plurality of batteries, it has an advantage in that it may prevent in advance accidents that may occur due to poor fastening between the plurality of batteries or external impact.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing an apparatus for diagnosing a battery according to an embodiment of the present disclosure.
FIG. 2 is a diagram schematically showing a plurality of batteries and an axial direction according to an embodiment of the present disclosure.
FIG. 3 is a diagram schematically showing an exemplary configuration of a battery pack according to another embodiment of the present disclosure.
FIG. 4 is a diagram schematically showing an exemplary configuration of a vehicle according to still another embodiment of the present disclosure.
FIG. 5 is a diagram schematically showing a method for diagnosing a battery according to still another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, a preferred embodiment of the present disclosure will be described in detail with reference to the accompanying drawings.

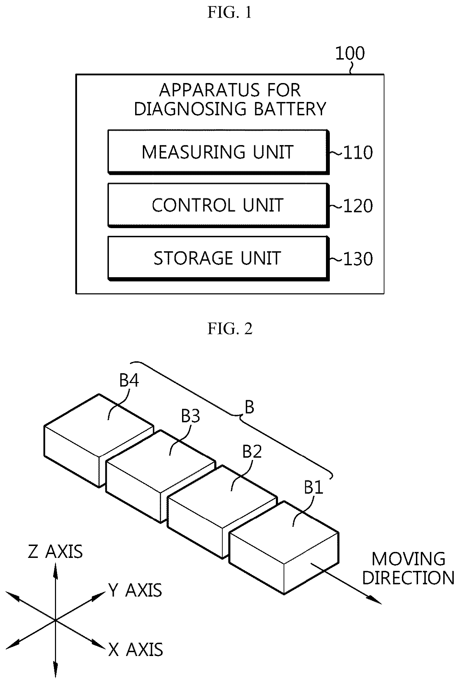

FIG. 1 is a diagram schematically illustrating an apparatus 100 for diagnosing a battery according to an embodiment of the present disclosure.

Referring to FIG. 1, the apparatus 100 for diagnosing a battery may include a measuring unit 110 and a control unit 120.

The measuring unit 110 may be configured to measure a vibration value generated in a preset axial direction for each of a plurality of batteries B.

Here, the battery refers to an independent cell that has a negative electrode terminal and a positive electrode terminal and is physically separable. As an example, a lithium-ion cell or a lithium polymer cell may be considered a battery. Also, the battery may mean a battery module having a plurality of cells connected in series and/or in parallel. In addition, the battery may mean a battery pack having a plurality of batteries modules connected in series and/or in parallel.

In addition, the preset axial direction may be set based on the moving direction of a plurality of batteries B. Specifically, the preset axial direction may include an X-axis direction, a Y-axis direction, and a Z-axis direction.

For example, the X-axis direction may be set to the moving direction of the plurality of batteries B. The Y-axis direction may be set to the left and right direction perpendicular to the moving direction of the plurality of batteries B. The Z-axis direction may be set to the upper and lower direction perpendicular to the moving direction of the plurality of batteries B.

FIG. 2 is a diagram schematically showing a plurality of batteries B and an axial direction according to an embodiment of the present disclosure.

For example, in the embodiment of FIG. 2, a plurality of batteries B may be electrically connected. The moving direction of the plurality of batteries B may be set as an X-axis direction. The left and right direction perpendicular to the moving direction of the plurality of batteries B may be set as a Y-axis direction. The upper and lower direction perpendicular to the moving direction of the plurality of batteries B may be set as a Z-axis direction.

In an example where a plurality of batteries B are provided in a vehicle, the X-axis direction is a running direction of the vehicle. For example, the X-axis direction may be a normal running direction of the vehicle. Also, the Y-axis direction is a left and right direction perpendicular to the running direction (X-axis direction) of the vehicle. For example, the Y-axis direction may be a direction parallel to the ground on which the vehicle is located among a plurality of directions perpendicular to the running direction (X-axis direction) of the vehicle. Finally, the Z-axis direction is an upper and lower direction perpendicular to the running direction (X-axis direction) of the vehicle. For example, the Z-axis direction may be a direction perpendicular to the ground on which the vehicle is located among a plurality of directions perpendicular to the running direction (X-axis direction) of the vehicle.

The control unit 120 may be configured to diagnose the state of the plurality of batteries B from the vibration value of each of the plurality of batteries B based on at least one of a reference deviation value preset for the plurality of batteries B and a reference vibration value preset to correspond to the axial direction.

Specifically, the control unit 120 may diagnose the state of the battery as a normal state or a defective state.

For example, the control unit 120 may diagnose the state of the plurality of batteries B based on the preset reference deviation value. The control unit 120 may calculate the vibration value deviation for each of the plurality of vibration values. Specifically, the control unit 120 may calculate the average of the plurality of vibration values, and calculate the difference between the plurality of vibration values and the average to calculate the vibration value deviation of each of the plurality of batteries B. The control unit 120 may compare the calculated plurality of vibration value deviations with the preset reference deviation value. The control unit 120 may be configured to diagnose the state of the battery whose vibration value deviation is less than or equal to the reference deviation value as a normal state, and to diagnose the state of the battery whose vibration value deviation exceeds the reference deviation value as a defective state.

As another example, the control unit 120 may diagnose the state of the plurality of batteries B based on the preset reference vibration value. The control unit 120 may compare the plurality of vibration values measured by the measuring unit 110 with the preset reference vibration value. Here, the reference vibration value may be a reference value preset to correspond to the axial direction. The control unit 120 may be configured to diagnose a state of a battery whose vibration value is less than or equal to the reference vibration value as a normal state, and to diagnose a state of a battery whose vibration value exceeds the reference vibration value as a defective state.

As still another example, the control unit 120 may diagnose the state of the plurality of batteries B based on the preset reference deviation value and the preset reference vibration value. If the state of the battery diagnosed by comparing the reference deviation value and the vibration value deviation is assumed to be a first battery B1 state and the state of the battery diagnosed by comparing the reference vibration value and the vibration value is assumed to be a second battery B2 state, the control unit 120 may be configured to diagnose the state of the battery as a normal state if both the first battery B1 state and the second battery B2 state are normal states. In other words, the control unit 120 may be configured to diagnose the state of the battery as a defective state if the first battery B1 state or the second battery B2 state is a defective state.

The apparatus 100 for diagnosing a battery according to an embodiment of the present disclosure has an advantage in that it may diagnose the state of the battery based on the amount of vibration in the axial direction set based on the moving direction of the plurality of batteries B. That is, since the apparatus 100 for diagnosing a battery may quickly diagnose the state of a plurality of batteries B based on the amount of vibration of the plurality of batteries B, it has an advantage in that it may prevent in advance accidents that may occur due to poor fastening between the plurality of batteries B or external impact.

Meanwhile, the control unit 120 included in the apparatus 100 for diagnosing a battery may optionally include processors, application-specific integrated circuits (ASICs), other chipsets, logic circuits, registers, communication modems, data processing devices, etc. known in the art to execute various control logics performed in the present disclosure. Also, when the control logic is implemented as software, the control unit 120 may be implemented as a set of program modules. At this time, the program module may be stored in the memory and executed by the control unit 120. The memory may be inside or outside the control unit 120 and may be connected to the control unit 120 by various well-known means.

In addition, the apparatus 100 for diagnosing a battery may further include a storage unit 130. The storage unit 130 may store data necessary for operation and function of each component of the apparatus 100 for diagnosing a battery, data generated in the process of performing the operation or function, or the like. The storage unit 130 is not particularly limited in its kind as long as it is a known information storage means that can record, erase, update and read data. As an example, the information storage means may include RAM, flash memory, ROM, EEPROM, registers, and the like. In addition, the storage unit 130 may store program codes in which processes executable by the control unit 120 are defined.

The control unit 120 may be configured to calculate a vibration value deviation of the plurality of vibration values measured by the measuring unit 110 for each axial direction.

Specifically, the measuring unit 110 may measure the vibration value of each of the plurality of batteries B. Also, the control unit 120 may calculate an average of the plurality of vibration values measured for the plurality of batteries B. In addition, the control unit 120 may calculate a vibration value deviation of the plurality of vibration values by calculating a difference between each of the plurality of vibration values and the average. Preferably, the control unit 120 may calculate the vibration value deviation in the X-axis direction, the vibration value deviation in the Y-axis direction, and the vibration value deviation in the Z-axis direction, respectively.

For example, in the embodiment of FIG. 2, the measuring unit 110 may measure the vibration value in the X-axis direction, the vibration value in the Y-axis direction, and the vibration value in the Z-axis direction of the first battery B1, the second battery B2, the third battery B3, and the fourth battery B4. Here, the vibration value in the X-axis direction, the vibration value in the Y-axis direction, and the vibration value in the Z-axis direction may each be measured four times. The control unit 120 may calculate the vibration value deviation in the X-axis direction, the vibration value deviation in the Y-axis direction, and the vibration value deviation in the Z-axis direction, respectively, for the first battery B1, the second battery B2, the third battery B3, and the fourth battery B4.

The control unit 120 may be configured to compare each generated vibration value deviation with a reference deviation value.

Specifically, the reference deviation value may be set for each of the X-axis direction, the Y-axis direction, and the Z-axis direction. For example, assuming that a plurality of batteries B are included in a vehicle, vibration may occur as the plurality of batteries B are shaken in the running direction (X-axis direction) of the vehicle. However, the frequency of the plurality of batteries B shaking in the left and right direction (Y-axis direction) or the upper and lower direction (Z-axis direction) of the running direction of the vehicle is relatively low. Therefore, the reference deviation value may be set for each axial direction.

For example, in the embodiment of FIG. 2, the control unit 120 may compare the vibration value deviation in the X-axis direction of the first battery B1 with a reference deviation value in the X-axis direction, compare the vibration value deviation in the Y-axis direction with a reference deviation value in the Y-axis direction, and compare the vibration value deviation in the Z-axis direction with a reference deviation value in the Z-axis direction. Similarly, the control unit 120 may compare the vibration value deviations of the second battery B2, the third battery B3, and the fourth battery B4 with the reference deviation value.

The control unit 120 may be configured to diagnose the state of each of the plurality of batteries B based on the comparison results.

Specifically, the control unit 120 may be configured to diagnose a state of a battery whose vibration value deviation is less than or equal to the reference deviation value as a normal state, and to diagnose a state of a battery whose vibration value deviation exceeds the reference deviation value as a defective state.

Here, the normal state means that the connection state with other batteries is normal. Conversely, the defective state means that the connection state with other batteries is defective.

For example, in the embodiment of FIG. 2, if a connecting member such as a connector connected to the first battery B1 and the second battery B2 is broken, the vibration values measured for the first battery B1 and the second battery B2 may be greater than the vibration values measured for the third battery B3 and the fourth battery B4. If the deviation of the vibration values of the first battery B1 and the second battery B2 exceeds the reference deviation value, the control unit 120 may diagnose the state of the first battery B1 and the second battery B2 as a defective state. Conversely, if the deviation of the vibration values of the third battery B3 and the fourth battery B4 is less than or equal to the reference deviation value, the control unit 120 may diagnose the state of the third battery B3 and the fourth battery B4 as a normal state.

The apparatus 100 for diagnosing a battery according to an embodiment of the present disclosure has an advantage in that it may diagnose the state of each of the plurality of batteries B through a relative comparison of the vibration values of the plurality of batteries B (e.g., vibration value deviation).

Below, an example of diagnosing the state of a battery by comparing the first vibration value generated in the X-axis direction and the first reference vibration value is described.

The measuring unit 110 may be configured to measure the first vibration value of each of the plurality of batteries B generated in the X-axis direction for each preset measurement cycle.

For example, in the embodiment of FIG. 2, the measuring unit 110 may measure the first vibration value of the first to fourth batteries B1, B2, B3, B4 for each preset measurement cycle.

The control unit 120 may be configured to calculate the number of times that the maximum value of the first vibration value measured per measurement cycle during a preset threshold time is greater than or equal to a first reference vibration value preset to correspond to the X-axis direction.

Here, the first reference vibration value is a reference vibration value preset for the X-axis direction.

For example, it is assumed that the threshold time is 100 seconds and the measurement cycle is 10 seconds. Here, 10 measurement cycles may occur during the threshold time. The control unit 120 may calculate the number of times that the maximum value of the first vibration value of the first to fourth batteries B1, B2, B3, B4 is greater than or equal to the first reference vibration value in each of the 10 measurement cycles.

The control unit 120 may be configured to calculate the vibration value deviation with respect to the first vibration value when the calculated number of times reaches a reference number. Also, the control unit 120 may diagnose the state of the battery whose vibration value deviation is less than or equal to the reference deviation value as a normal state. Conversely, the control unit 120 may be configured to diagnose the state of the battery whose vibration value deviation exceeds the reference deviation value as a defective state.

Specifically, if the number of times that the maximum value of the first vibration value of the plurality of batteries B is greater than or equal to the first reference vibration value reaches the reference number, there may be a problem with the connection of at least one battery among the plurality of batteries B. In this case, the control unit 120 may calculate the vibration value deviation for the plurality of first vibration values and compare the calculated vibration value deviation with the reference deviation value to diagnose the state of the battery as a normal state or a defective state.

For example, in the previous embodiment, it is assumed that the number of times that the maximum value of the first vibration value of the first to fourth batteries B1, B2, B3, B4 is greater than or equal to the first reference vibration value reaches the reference number. The control unit 120 may calculate the vibration value deviation of the first to fourth batteries B1, B2, B3, B4 that was measured last. Also, the control unit 120 may compare the calculated vibration value deviation of the first to fourth batteries B1, B2, B3, B4 with the reference deviation value to diagnose the state of each of the first to fourth batteries B1, B2, B3, B4.

Therefore, the apparatus 100 for diagnosing a battery may first determine whether a connection problem occurs by comparing the maximum value of the plurality of first vibration values with the first reference vibration value. Also, the apparatus 100 for diagnosing a battery may secondarily diagnose the state of each of the plurality of batteries B by comparing the vibration value deviation of the plurality of batteries B when there is a high possibility that a connection problem occurs in at least one of the plurality of batteries B (when the number of times that the maximum value of the first vibration value is greater than or equal to the first reference vibration value reaches the reference number).

Below, an example of diagnosing the state of a battery based on vibration values generated in the Y-axis direction and Z-axis direction is described.

The measuring unit 110 may be configured to measure the second vibration value of each of the plurality of batteries B generated in the Y-axis direction.

For example, in the embodiment of FIG. 2, the measuring unit 110 may measure the second vibration value of the first to fourth batteries B1, B2, B3, B4 for each preset measurement cycle.

The control unit 120 may be configured to diagnose a state of a battery whose second vibration value is lower than or equal to a second reference vibration value preset to correspond to the Y-axis direction as a normal state. Conversely, the control unit 120 may be configured to diagnose a state of a battery whose second vibration value exceeds the second reference vibration value as a defective state.

Here, the second reference vibration value is a reference vibration value preset for the Y-axis direction.

For example, in the embodiment of FIG. 2, the control unit 120 may compare the second vibration value of the first battery B1 with the second reference vibration value, and diagnose the state of the first battery B1 according to the comparison result. The control unit 120 may compare the second vibration value of the second battery B2 with the second reference vibration value, and diagnose the state of the second battery B2 according to the comparison result. The control unit 120 may compare the second vibration value of the third battery B3 with the second reference vibration value, and diagnose the state of the third battery B3 according to the comparison result. The control unit 120 may compare the second vibration value of the fourth battery B4 with the second reference vibration value, and diagnose the state of the fourth battery B4 according to the comparison result.

Below, an example of diagnosing the state of a battery by comparing a third vibration value generated in the Z-axis direction and a third reference vibration value is described.

The measuring unit 110 may be configured to measure a third vibration value of each of the plurality of batteries B generated in the Z-axis direction.

For example, in the embodiment of FIG. 2, the measuring unit 110 may measure the third vibration value of the first to fourth batteries B1, B2, B3, B4 for each preset measurement cycle.

The control unit 120 may be configured to diagnose a state of a battery whose third vibration value is lower than or equal to a third reference vibration value preset to correspond to the Z-axis direction as a normal state. Conversely, the control unit 120 may be configured to diagnose a state of a battery whose third vibration value exceeds the third reference vibration value as a defective state.

Here, the third reference vibration value is a reference vibration value preset for the Z-axis direction.

For example, in the embodiment of FIG. 2, the control unit 120 may compare the third vibration value of the first battery B1 with the third reference vibration value, and diagnose the state of the first battery B1 according to the comparison result. The control unit 120 may compare the third vibration value of the second battery B2 with the third reference vibration value, and diagnose the state of the second battery B2 according to the comparison result. The control unit 120 may compare the third vibration value of the third battery B3 with the third reference vibration value, and diagnose the state of the third battery B3 according to the comparison result. The control unit 120 may compare the third vibration value of the fourth battery B4 with the third reference vibration value, and diagnose the state of the fourth battery B4 according to the comparison result.

As explained above, in general, a plurality of batteries B hardly generate vibrations in the left and right direction (Y-axis direction) or the upper and lower direction (Z-axis direction) of the moving direction (X-axis direction). Therefore, in order to diagnose the state of the battery more accurately, the first reference vibration value corresponding to the X-axis direction, the second reference vibration value corresponding to the Y-axis direction, and the third reference vibration value corresponding to the Z-axis direction must be set independently.

If one reference vibration value (e.g., a first reference vibration value corresponding to the X-axis direction) is compared with the vibration values in other axial directions (e.g., the Y-axis direction and the Z-axis direction) without considering the movement characteristics of the plurality of batteries B along the axial direction, the state of the battery may not be accurately diagnosed. This is because the vibration values (allowable vibration ranges) that generally occur along each axial direction are different.

Therefore, the apparatus 100 for diagnosing a battery has the advantage of being able to diagnose the state of the battery more accurately by using reference vibration value corresponding to each axial direction.

The control unit 120 may be configured to electrically isolate a battery diagnosed as a defective state from a battery diagnosed as a normal state.

Specifically, a battery whose connection to another battery is poor or weak may be diagnosed as a defective state. The control unit 120 may electrically isolate a battery diagnosed as a defective state from a battery diagnosed as a normal state in order to prevent electrical problems such as a short circuit from occurring due to the battery diagnosed as a defective state.

For example, the control unit 120 may electrically isolate the battery diagnosed as a defective state from the battery diagnosed as a normal state by controlling a relay connecting the battery diagnosed as a defective state and the battery diagnosed as a normal state to turn off, or by performing a protective action such as cutting a fuse.

Therefore, the apparatus 100 for diagnosing a battery has the advantage of being able to prevent electrical accidents that may occur from a battery in a defective state.

The apparatus 100 for diagnosing a battery according to the present disclosure may be applied to a battery management system (BMS). That is, the BMS according to the present disclosure may include the apparatus 100 for diagnosing a battery described above. In this configuration, at least some of components of the apparatus 100 for diagnosing a battery may be implemented by supplementing or adding functions of the components included in a conventional BMS. For example, the measuring unit 110, the control unit 120 and the storage unit 130 of the apparatus 100 for diagnosing a battery may be implemented as components of the BMS.

Additionally, the apparatus 100 for diagnosing a battery according to the present disclosure may be provided in the battery pack. That is, the battery pack according to the present disclosure may include the above-described apparatus 100 for diagnosing a battery and at least one battery cell. Additionally, the battery pack may further include electrical components (relays, fuses, etc.) and a case.

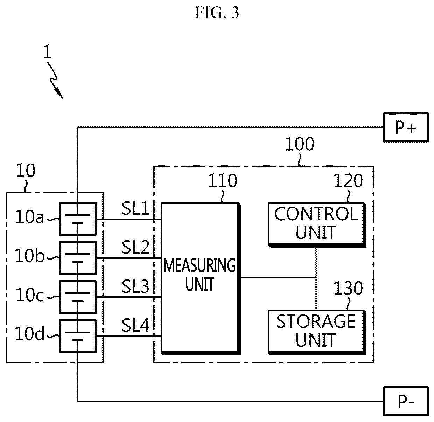

FIG. 3 is a diagram schematically showing an exemplary configuration of a battery pack 1 according to another embodiment of the present disclosure.

The battery pack 1 may include a plurality of batteries 10. In the embodiment of FIG. 3, the first battery 10a, the second battery 10b, the third battery 10c, and the fourth battery 10d may be connected in series. However, it should be noted that the connection relationship of the plurality of batteries 10 is not limited to the embodiment of FIG. 3, and the plurality of batteries 10 may be connected in series and/or in parallel.

The positive electrode terminals of the plurality of batteries 10 may be connected to the positive electrode terminal P+ of the battery pack 1, and the negative electrode terminals of the plurality of batteries 10 may be connected to the negative electrode terminal P- of the battery pack 1.

The measuring unit 110 may measure the vibration value of each of the plurality of batteries 10 through the sensing line. Specifically, the measuring unit 110 may measure the first vibration value, the second vibration value, and the third vibration value of each of the plurality of batteries 10.

For example, the measuring unit 110 may be connected to the first sensing line SL1, the second sensing line SL2, the third sensing line SL3, and the fourth sensing line SL4. The measuring unit 110 may measure the vibration value of the first battery 10a through the first sensing line SL1, and may measure the vibration value of the second battery 10b through the second sensing line SL2. The measuring unit 110 may measure the vibration value of the third battery 10c through the third sensing line SL3, and may measure the vibration value of the fourth battery 10d through the fourth sensing line SL4.

An external device may be connected to the positive electrode terminal P+ and negative electrode terminal P- of the battery pack 1. For example, the external device may be a charging/discharging device or a motor of an electric vehicle that receives power from the battery pack 1.

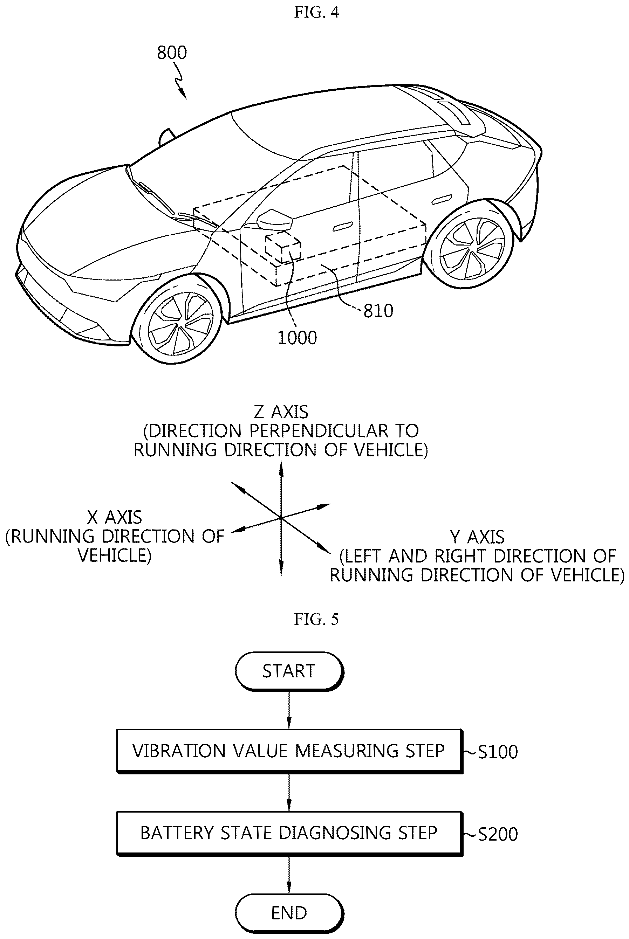

FIG. 4 is a diagram schematically showing a vehicle 800 according to another embodiment of the present disclosure.

Referring to FIG. 4, the battery pack 810 according to an embodiment of the present disclosure may be included in a vehicle such as an electric vehicle (EV) or a hybrid vehicle (HV). Additionally, the battery pack 810 may drive the vehicle 800 by supplying power to the motor through an inverter provided in the vehicle 800.

Hereinafter, it is described that the battery pack 810 includes a plurality of batteries B.

Considering the characteristics of the vehicle 800 moving back and forth, the running direction of the vehicle 800 may match the moving direction of the plurality of batteries B. For example, in the embodiment of FIG. 4, the running direction of the vehicle 800 is parallel to the X-axis direction. The control unit 120 may diagnose the state of each of the plurality of batteries B based on the first vibration value for the X-axis direction of the plurality of batteries B.

In addition, the left and right directions of the vehicle 800 may be left and right directions perpendicular to the running direction of the vehicle 800. For example, the left and right directions of the vehicle 800 may be directions parallel to the ground among the directions perpendicular to the running direction of the vehicle 800. In addition, the left and right directions of the vehicle 800 may be left and right directions perpendicular to the moving direction of the plurality of batteries B. For example, in the embodiment of FIG. 4, the left and right directions of the vehicle 800 are directions parallel to the Y-axis direction. The control unit 120 may diagnose the state of each of the plurality of batteries B based on the second vibration value for the Y-axis direction of the plurality of batteries B.

In addition, the upper and lower directions of the vehicle 800 may be upper and lower directions perpendicular to the running direction of the vehicle 800. For example, the upper and lower directions of the vehicle 800 may be directions perpendicular to the ground among the directions perpendicular to the running direction of the vehicle 800. In addition, the upper and lower directions of the vehicle 800 may be upper and lower directions perpendicular to the moving direction of the plurality of batteries B. For example, in the embodiment of FIG. 4, the upper and lower directions of the vehicle 800 are directions parallel to the Z-axis direction. The control unit 120 may diagnose the state of each of the plurality of batteries B based on the third vibration value for the Z-axis direction of the plurality of batteries B.

FIG. 5 is a diagram schematically showing a method for diagnosing a battery according to still another embodiment of the present disclosure.

Preferably, each step of the method for diagnosing a battery may be performed by the apparatus 100 for diagnosing a battery. Hereinafter, for convenience of explanation, the content overlapping with the previously described content will be briefly described or omitted.

The vibration value measuring step (S100) is a step of measuring a vibration value generated in a preset axial direction for each of a plurality of batteries B, and may be performed by the measuring unit 110.

For example, in the embodiment of FIG. 2, the measuring unit 110 may measure a first vibration value for the X-axis direction, a second vibration value for the Y-axis direction, and a third vibration value for the Z-axis direction for each of the first to fourth batteries.

The battery state diagnosing step (S200) is a step of diagnosing the state of the plurality of batteries B from the vibration value of each of the plurality of batteries B based on at least one of a reference deviation value preset for the plurality of batteries B and a reference vibration value preset to correspond to the axial direction, and may be performed by the control unit 120.

Specifically, the control unit 120 may diagnose the state of the battery as a normal state or a defective state.

For example, in the embodiment of FIG. 2, during a preset threshold time, the number of times that the maximum value of the first vibration value of the first to fourth batteries B1, B2, B3, B4 measured according to a measurement cycle is greater than or equal to a first reference vibration value may be calculated. Here, the first reference vibration value is a reference vibration value set for the X-axis direction. If the calculated number of times reaches a reference number, the control unit 120 may calculate the vibration value deviation for the first vibration value of the first to fourth batteries B1, B2, B3, B4. The control unit 120 may diagnose a state of a battery whose vibration value deviation is less than or equal to a reference deviation value as a normal state, and may diagnose a state of a battery whose vibration value deviation exceeds the reference deviation value as a defective state.

As another example, in the embodiment of FIG. 2, the control unit 120 may compare the second vibration value of the first to fourth batteries B1, B2, B3, B4 with a second reference vibration value. Here, the second reference vibration value is a reference vibration value set for the Y-axis direction. The control unit 120 may be configured to diagnose a state of a battery whose second vibration value is less than or equal to the second reference vibration value as a normal state, and to diagnose a state of a battery whose second vibration value exceeds the second reference vibration value as a defective state.

As another example, in the embodiment of FIG. 2, the control unit 120 may compare the third vibration value of the first to fourth batteries B1, B2, B3, B4 with a third reference vibration value. Here, the third reference vibration value is a reference vibration value set for the Z-axis direction. The control unit 120 may be configured to diagnose a state of a battery whose third vibration value is less than or equal to the third reference vibration value as a normal state, and to diagnose a state of a battery whose third vibration value exceeds the third reference vibration value as a defective state.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### (Explanation of reference signs)

1: battery pack
10: plurality of batteries
100: apparatus for diagnosing a battery
110: measuring unit
120: control unit
130: storage unit

## Claims

1. An apparatus for diagnosing a battery, comprising:
a measuring unit configured to measure a vibration value generated in a preset axial direction for each of a plurality of batteries; and
a control unit configured to diagnose a state of the plurality of batteries from the vibration value of each of the plurality of batteries based on at least one of a reference deviation value preset for the plurality of batteries and a reference vibration value preset to correspond to the axial direction.

2. The apparatus for diagnosing a battery according to claim 1,
wherein the preset axial direction is configured to include at least one of an X-axis direction set as a moving direction of the plurality of batteries; a Y-axis direction set as a left and right direction perpendicular to the moving direction of the plurality of batteries; and a Z-axis direction set as an upper and lower direction perpendicular to the moving direction of the plurality of batteries.

3. The apparatus for diagnosing a battery according to claim 2,
wherein the control unit is configured to calculate a vibration value deviation of a plurality of vibration values measured by the measuring unit for each axial direction, compare each calculated vibration value deviation with the reference deviation value, and diagnose the state of each of the plurality of batteries based on the comparison result.

4. The apparatus for diagnosing a battery according to claim 3,
wherein the control unit is configured to:
diagnose a state of a battery whose vibration value deviation is less than or equal to the reference deviation value as a normal state, and
diagnose a state of a battery whose vibration value deviation exceeds the reference deviation value as a defective state.

5. The apparatus for diagnosing a battery according to claim 3,
wherein the measuring unit is configured to measure a first vibration value of each of the plurality of batteries generated in the X-axis direction for each preset measurement cycle, and
wherein the control unit is configured to calculate the number of times that a maximum value of the first vibration value measured for each measurement cycle during a preset threshold time is equal to or greater than a first reference vibration value preset to correspond to the X-axis direction, and to calculate a vibration value deviation with respect to the first vibration value when the calculated number reaches a reference number.

6. The apparatus for diagnosing a battery according to claim 2,
wherein the measuring unit is configured to measure a second vibration value of each of the plurality of batteries generated in the Y-axis direction, and
wherein the control unit is configured to:
diagnose a state of a battery whose second vibration value is less than or equal to a second reference vibration value preset to correspond to the Y-axis direction as a normal state, and
diagnose a state of a battery whose second vibration value exceeds the second reference vibration value as a defective state.

7. The apparatus for diagnosing a battery according to claim 2,
wherein the measuring unit is configured to measure a third vibration value of each of the plurality of batteries generated in the Z-axis direction, and
wherein the control unit is configured to:
diagnose a state of a battery whose third vibration value is less than or equal to a third reference vibration value preset to correspond to the Z-axis direction as a normal state, and
diagnose a state of a battery whose third vibration value exceeds the third reference vibration value as a defective state.

8. The apparatus for diagnosing a battery according to claim 1,
wherein the control unit is configured to diagnose the state of each of the plurality of batteries as a normal state or a defective state, and electrically isolate a battery diagnosed as the defective state from a battery diagnosed as the normal state.

9. A battery pack comprising the apparatus for diagnosing a battery according to any one of claims 1 to 8.

10. A vehicle comprising the apparatus for diagnosing a battery according to any one of claims 1 to 8.

11. A method for diagnosing a battery, comprising:
a vibration value measuring step of measuring a vibration value generated in a preset axial direction for each of a plurality of batteries; and
a battery state diagnosing step of diagnosing a state of the plurality of batteries from the vibration value of each of the plurality of batteries based on at least one of a reference deviation value preset for the plurality of batteries and a reference vibration value preset to correspond to the axial direction.
